# EUROPÄISCHE PATENTSCHRIFT

(11) **EP 2 266 901 B1**
(45) Veröffentlichungstag und Bekanntmachung des Hinweises auf die Patenterteilung: **26.03.2014**
(21) Anmeldenummer: 10160549.1
(22) Anmeldetag: 21.04.2010
(51) Int. Cl.: B65G 47/68

(54) **Vorrichtung und Verfahren zum Beschicken einer Weiterverarbeitungseinheit mit Artikeln**
Device and method for charging a machining device with items
Dispositif et procédé de chargement d'articles pour une unité de traitement

(30) Priorität: 26.06.2009 DE 102009026043
(43) Veröffentlichungstag der Anmeldung: 29.12.2010
(73) Patentinhaber: Krones AG, 93073 Neutraubling (DE)
(72) Erfinder: Dirmeier, Emil, 93107, Thalmassing (DE); Hüttner, Johann, 84066, Mallersdorf (DE); Seger, Martin, 92318, Neumarkt i. d. Opf. (DE)
(74) Vertreter: Reichert, Werner Franz

(56) Entgegenhaltungen:
- EP-A1- 0 834 354
- EP-A2- 0 396 960
- DE-A1- 3 214 172
- DE-A1- 3 524 344
- DE-A1- 3 923 549
- DE-C1- 19 829 484
- DE-U1-202006 002 351
- FR-A1- 2 438 608
- US-A- 3 845 851

## Beschreibung

Die vorliegende Erfindung betrifft eine Vorrichtung zum Beschicken einer Weiterverarbeitungseinheit mit Artikeln. Im Besonderen soll die Weiterverarbeitungseinheit mit min-destens zwei unterschiedlichen Artikeltypen beschickt werden.

Die vorliegende Erfindung betrifft auch ein Verfahren zum Beschicken einer Weiterverarbeitungseinheit mit Artikeln. Die Artikel umfassen dabei mindestens zwei unterschiedliche Artikeltypen.

Die europäische Patentanmeldung EP 0 709 317 A1 offenbart ein System, bei dem von einem Transportband Artikel auf ein anderes Transportband umgeordnet werden. Die beiden Transportbänder stehen dabei im rechten Winkel zueinander. Auf dem Anlieferungsband werden die Artikel Stoß an Stoß an-transportiert. Die Artikel gelangen dabei zwischen zwei Zuführbänder, die seitlich an den Artikeln angreifen und diese einem drehenden Element zuführen, das die Artikel aufrichtet und letztendlich an das zweite Transportband übergibt. Das erste Transportband und das zweite Transportband stehen dabei im rechten Winkel zueinander.

Die internationale Patentanmeldung WO 97/11014 offenbart eine Vorrichtung zum Transport von Produkten von der Produktionslinie zu einer Verpackungseinheit. Die Vorrichtung umfasst ein endloses Transportband, welches zwei Riemen umfasst. Auf dem Transportband werden die zu transportierenden Produkte abgesetzt. Die Vorrichtung weist eine Beladestation und eine Entladestation auf. An der Entladestation werden die Produkte vom Transportband abgenommen. Auf dem Transportband sind mehrere Behältnisse vorhanden, in denen die Produkte abgesetzt und mit denen die Produkte transportiert werden. Die Beladestation ist ebenfalls aus einem Förderband gebildet, das senkrecht zu dem Transportband für die Produkte in den Behältnissen angeordnet ist. Von dem Transportband werden die Produkte in die einzelnen Behältnisse des Transportbandes übergeführt. Der Entladestation ist ein entsprechendes Mittel zugeordnet, dass die Produkte von dem Transportband mit den Behältnissen an eine Weiterverarbeitungseinheit überführt.

Das U.S.-Patent 4,560,058 offenbart ein System zum Handhaben von Behältnissen. In dem System ist es möglich, längliche Artikel, wie z. B. röhrenförmige Behältnisse, zu handhaben. Die einzelnen Artikel werden Stoß an Stoß mit Hilfe der Gravitationskraft einem Förderband zugeführt. Das Förderband selbst trägt eine Vielzahl von Behältnissen, in die nacheinander die Artikel eingesetzt werden, um mit dem Transportband weiter transportiert zu werden. Die zu transportierenden Artikel sind somit auf dem Transportband in einer Reihe angeordnet.

DE 198 29 484 C1 beschreibt eine gattungsgemäße Vorrichtung.

Aufgabe der Erfindung ist, eine Vorrichtung zu schaffen, mit der es möglich ist, mit hoher Leistung Artikel in einem vorbestimmten Sortierschema zusammenzustellen, damit eine Weiterverarbeitungseinheit die Möglichkeit hat, aus diesen Artikeln Gebinden mit unterschiedlichen Artikeltypen zu konfigurieren.

Die obige Aufgabe wird durch eine Vorrichtung gelöst, die die Merkmale des Anspruchs 1 umfasst.

Aufgabe der Erfindung ist auch, ein Verfahren zu schaffen, mit dem es möglich ist, mittels hoher Leistung unterschiedliche Artikeltypen derart zusammenzustellen, dass mit einer Weiterverarbeitungseinheit die unterschiedlichen Artikeltypen zu Gebinden zusammengestellt werden können, wobei die Gebinde selbst aus unterschiedlichen Artikeltypen bestehen.

Die obige Aufgabe wird durch ein Verfahren gelöst, das die Merkmale des Patentanspruchs 10 umfasst.

Nachfolgend werden die erfindungsgemäße Vorrichtung und das erfindungsgemäße Verfahren beschrieben.

Unter dem Begriff Weiterverarbeitungseinheit ist im weitesten Sinne eine Verpackungsmaschine zu verstehen, die aus den unterschiedlichen Artikeln Gebinde zusammenstellt. Dabei ist zu beachten, dass die Gebinde jeweils mindestens zwei unterschiedliche Artikeltypen umfassen. Die Anzahl der unterschiedlichen Artikeltypen in einem Gebinde hängt letztendlich von einem Sortierschema ab, dass ein Benutzer der Vorrichtung entsprechend wählen und auch zeitlich verändern kann.

Es besteht die Möglichkeit, dass der Weiterverarbeitungseinheit ein Gruppiertisch vorgeordnet ist, auf dem die unterschiedlichen Artikeltypen nach einem vorbestimmten Schema angeordnet sind.

Die Artikel umfassen dabei mindestens zwei unterschiedliche Artikeltypen. Auf dem Gruppiertisch sollen die unterschiedlichen Artikeltypen nach einem vorbestimmten Schema angeordnet werden. Das Schema richtet sich nach dem Muster, wie die einzelnen Artikel der unterschiedlichen Artikeltypen in einem Gebinde zusammengestellt werden sollen. Hierzu umfasst die Vorrichtung mehrere Zuführeinheiten, die jeweils eine Transportrichtung definieren. Jede der Zuführeinheiten führt je einen Artikeltyp einem Transportband zu. Das Transportband selbst definiert ebenfalls eine Transportrichtung. Das Transportband ist dem Gruppiertisch vorgeordnet. Ferner ist eine Steuereinheit vorgesehen, die ebenfalls die mehreren Zuführeinheiten derart steuert, dass die unterschiedlichen Artikeltypen gemäß dem vorbestimmten Schema an das Transportband übergebbar sind.

Die Transportrichtung der Zuführeinheiten ist zur Transportrichtung des Transportbandes unter einem bestimmten Winkel angeordnet. Es ist von besonderem Vorteil, wenn der Winkel, unter dem die Transportrichtungen der Zuführeinheiten zur Transportrichtung des Transportbandes angeordnet sind, gleich ist.

Der Winkel unter dem die Transportrichtung der Zuführeinheiten zu der Transportrichtung des Transportbandes angeordnet ist, liegt vorteilhafter Weise im Bereich zwischen 45° und 90°. Die Anordnung der Transportrichtung des Zuführbandes zu der Transportrichtung des Transportbandes liegt bevorzugter Weise zwischen 50° und 70°.

Das Transportband ist als eine Fächerkette oder Schleppkette ausgebildet. Die Fächerkette hat dabei einzelne Fächer ausgebildet, in die die einzelnen zu transportierenden Artikel bzw. in die die einzelnen Takte aus gleichen Artikeln eingefügt werden. Für jeden Artikel ist dabei ein Behältnis auf dem Transportband vorgesehen. Die Zuführeinheiten bestehen dabei aus einem ersten Band und einem zweiten Band. Das erste Band und das zweite Band liegen dabei beidseits an den zu vereinzelnden Artikeln an. Jedes der Bänder ist mit einem Motor versehen. Ebenso denkbar ist es, beide Bänder mit einem Motor anzutreiben und die Kopplung mittels einer mechanischen Einheit herzustellen. Somit ist es möglich, dass durch gezielten Antrieb der Bänder eine entsprechende Anzahl von Artikeln in die Fächer des Transportbandes übergeführt werden können. Die Steuerung der einzelnen Bänder der Zuführeinheiten erfolgt dabei in Abhängigkeit von dem Sortier- oder Packschema, mit dem letztendlich die Artikel dem Gruppiertisch übergeben werden müssen.

Die mehreren Zuführeinheiten, welche aus einem ersten Band und einem zweiten Band bestehen und beidseits der zu vereinzelnden Artikel angeordnet sind, können auf einer Führung angeordnet sein. Mittels der Führung kann das erste Band und das zweite Band mittels an den Durchmesser der Artikel zu transportierenden Artikel angepasst werden.

Erfindungsgemäß wird zwischen jeder der Zuführeinheit und dem Transportband eine Übergabekette vorgesehen. Die Übergabekette liegt an einem Ende der Zuführeinheit gegenüber. Am anderen Ende liegt die Übergabekette dem Transportband gegenüber. Die Übergabekette ist dabei derart gestaltet, dass an dem Ende, an dem die Übergabekette der Zuführeinheit gegenüberliegt, die Übergabekette mit der Transportrichtung der Zuführeinheit ausgerichtet ist. An dem anderen Ende, an dem die Zuführeinheit der Transportrichtung gegenüberliegt, ist die Zuführeinheit im Wesentlichen mit der Transportrichtung des Transportbandes ausgerichtet.

Mit dem erfindungsgemäßen Verfahren ist es möglich, eine Weiterverarbeitungseinheit mit Artikeln aus mindestens zwei unterschiedlichen Artikeltypen zu beschicken. Unter dem Begriff der "unterschiedlichen Artikeltypen" ist die unterschiedliche Form des Stückguts, unterschiedliche Gebinde, unterschiedliche Behälter und/oder Behälter mit unterschiedlichem Inhalt zu verstehen. Gemäß einem ersten Schritt des Verfahrens wird ein Sortierschema vorgegeben, mit dem die unterschiedlichen Artikeltypen dem Gruppiertisch zugeordnet werden sollen. Für die Vorgabe des Sortier- oder Packschemas ist eine Steuereinheit vorgesehen. In Abhängigkeit von dem Sortier- oder Packschema werden aus mehreren Zuführeinheiten die Artikel einem Transportband übergeben. Jede der Zuführeinheiten enthält sortenreine Artikel. Bei der Übergabe von der Zuführeinheit an das Transportband werden die Artikel in je ein Fach des Transportbandes übergeben. Auf dem Transportband wird letztlich von den unterschiedlichen Artikeltypen, gemäß dem vorgegebenen Sortier- oder Packschema, eine Reihe gebildet. Die Reihe umfasst mehrere Takte, wobei jeder Takt einen Artikel eines Typs umfasst.

Die Reihe aus den Takten, die sich hinsichtlich des Artikeltyps unterschieden, werden einem Gruppiertisch zugeführt. Mit dem Gruppiertisch wird aus den Takten das für die Weiterverarbeitungseinheit erforderliche Sortier- bzw. Packschema erzeugt.

Die Erfindung findet vor allem bei der Zusammenstellung von Gebinden aus Getränkeflaschen Anwendung. Die Flaschen werden vereinzelt von einer oder mehreren Zuführeinheiten, welche als Servoantriebseinheiten ausgeführt sind, zugeführt. Abhängig von einem Sortierschema wird ein Transportband, das als Fächerkette oder Schleppkette ausgebildet ist, mit einer vorbestimmten Anzahl von Produkten bzw. Takten von Produkten bestückt. Die Zuführeinheiten bzw. die Transportrichtung der Zuführeinheiten ist in Bezug auf die Fächerkette oder Schleppkette in einem Winkel von 60° bis 90° angeordnet. Der Inhalt der Fächerkette bzw. Schleppkette kann in einem Register auch beschrieben werden, um diese auf Richtigkeit kontrollieren zu können. Wie bereits vorstehend beschrieben, werden anschließend die Behälter per Linearverteilung in Gassen nach dem vorbestimmten Sortierschema der Verpackungsmaschine bzw. dem Packer übergeben.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht den realen Größenverhältnissen, da einige Formen vereinfacht und andere Formen zur besseren Veranschaulichung vergrößert im Verhältnis zu anderen Elementen dargestellt sind. Es zeigen:
- **Figur 1**: einen schematischen Aufbau einer Vorrichtung zum Beschicken einer Weiterverarbeitungseinheit mit Artikeln;
- **Figur 2**: eine Zuordnung einer Zuführeinheit zu einem Transportband, welches letztendlich die Artikel in einer vorbestimmten Sortierung der Weiterver- arbeitungseinheit bzw. einem Gruppiertisch zuführt;
- **Figur 3**: eine Ausführungsform der Erfindung, bei der vier Zuführeinheiten vorge- sehen sind, um Artikel einem Transportband zuzuführen; und
- **Figur 4**: eine Detailansicht einer Zuführeinheit in Zuordnung zu dem Transport- band, wobei zwischen Zuführeinheit und Transportband eine Übergabe- kette angeordnet ist, die die Artikel von der Zuführeinheit zu dem Trans- portband bewegt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

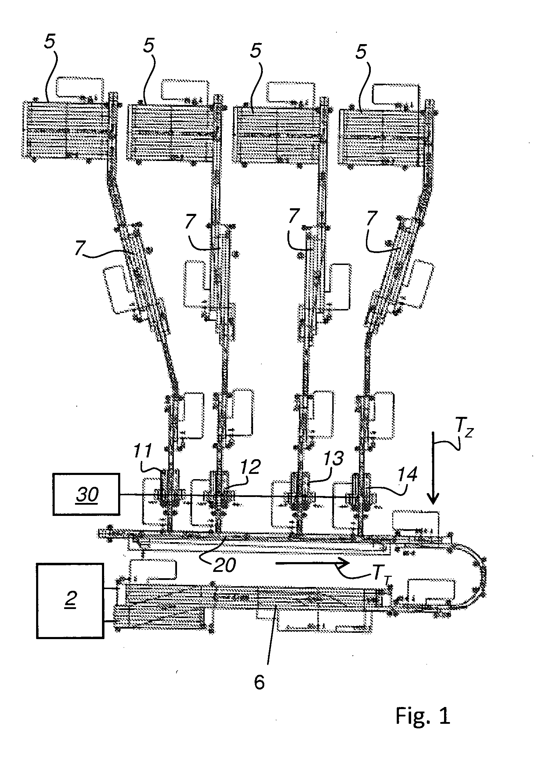

**Figur 1** zeigt eine schematische Ansicht einer Vorrichtung zum Beschicken einer Weiterverarbeitungseinheit 2 mit Artikeln 4. Bei der hier beschriebenen Ausführungsform ist der Weiterverarbeitungseinheit ein Gruppiertisch vorgeordnet, auf dem die unterschiedlichen Artikeltypen nach einem vorbestimmten Schema angeordnet sind. Es ist für einen Fachmann selbstverständlich, dass dies nur eine mögliche Ausführungsform ist und nicht als eine Beschränkung der Erfindung aufgefasst werden kann. Die Artikel 4 werden über mehrspurige Bänder 5 der Vorrichtung zugeführt. Am Ende der mehrspurigen Bänder 5 ist eine Vereinzelung 7 vorgesehen, die aus dem mehrspurigen Strom der Artikel 4 einen einspurigen Strom erzeugt. Den einzelnen Zuführeinheiten 11, 12, 13 und 14 werden die Artikel 4 jeweils in einem einspurigen Strom und Stoß an Stoß zugeführt. Die Ausgänge der Zuführeinheiten 11, 12, 13 und 14 sind mit einem Transportband 20 verbunden, auf dem die Artikel 4 ebenfalls in einer Reihe transportiert werden. Von dem Transportband 20 gelangen die Artikel 4 zu einem Gruppiertisch 6, der entsprechend eines vorgewählten Sortierschemas die Artikel 4 in mehrere Gassen aufteilt. Von dem Gruppiertisch 6 gelangen letztendlich die gemäß dem Sortierschema zusammengestellten Artikel 4 zu der Weiterverarbeitungseinheit 2. In der Regel ist die Weiterverarbeitungseinheit 2 eine Packmaschine, welche aus dem gemäß dem vorbestimmten Sortierschema zusammengestellten Artikeln 4 jeweils unterschiedlichen Typs die Gebinde aus unterschiedlichen Gebindetypen zusammenstellt. Die Zuführeinheiten 11, 12, 13 und 14 sind ebenfalls mit einer Steuereinheit 30 verbunden. Die Steuereinheit 30 steuert die Zuführeinheiten 11, 12, 13 und 14 derart, dass auf dem Transportband 20 eine Reihe aus Artikeln 4 erzeugt werden kann, die sich ihren Takten 32 unterscheiden. Jeder der Takte 32 kann dabei einen anderen Artikeltyp enthalten. Bei der in Figur 1 gezeigten Ausführungsform der erfindungsgemäßen Vorrichtung endet die Transportrichtung T_{Z} der Zuführeinheiten 11, 12, 13 und 14 senkrecht in Bezug auf die Transportrichtung T_{T} des Transportbandes 20.

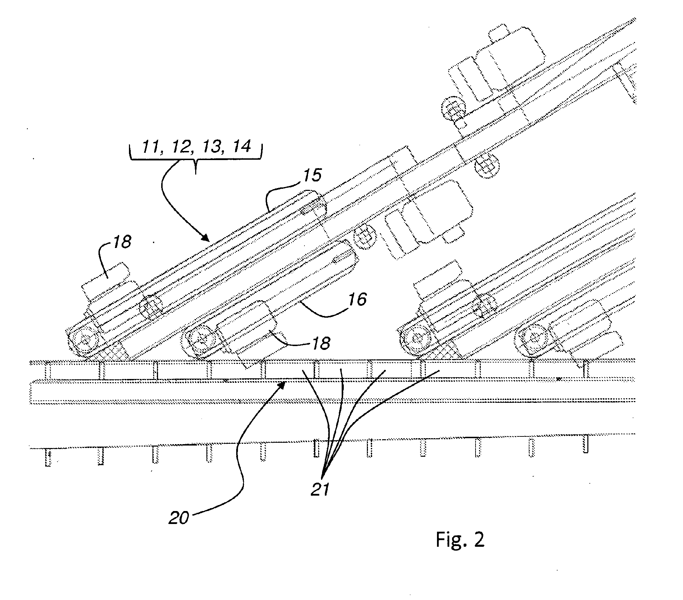

**Figur 2** zeigt die Anordnung der Zuführeinheiten 11, 12, 13 und 14 in Bezug auf das Transportband 20. Jede der Zuführeinheiten 11, 12, 13 und 14 besteht aus einem ersten Band 15 und einem zweiten Band 16. Das erste Band 15 und das zweite Band 16 ist jeweils über einen Motor 18 antreibbar. Der Ausgang einer jeden Zuführeinheit 11, 12, 13 und 14 endet direkt am Transportband 20. Somit ist es möglich, dass bei entsprechender Steuerung der Zuführeinheiten 11, 12, 13 und 14 die Artikel 4 direkt von der Zuführeinheit 11, 12, 13 und 14 an das Transportband 20 übergeben werden können. Das Transportband 20 ist als Fächerkette oder Schleppkette ausgebildet. Somit werden bei der in Figur 2 gezeigten Ausführungsform die Artikel 4 direkt von der Zuführeinheit 11, 12, 13 und 14 an die einzelnen Fächer 21 des Transportbandes 20 übergeben. Die zu übergebenden Artikel 4 sind zwischen dem ersten Band 15 und dem zweiten Band 16 der Zuführeinheit 11, 12, 13 und 14 seitlich geführt und werden durch die entsprechende Bewegung des ersten Bandes 15 und des zweiten Bandes 16 an das Transportband 20 übergeben. Die Artikel 4 sind in der Zuführeinheit 11, 12, 13 und 14 Stoß an Stoß angeordnet.

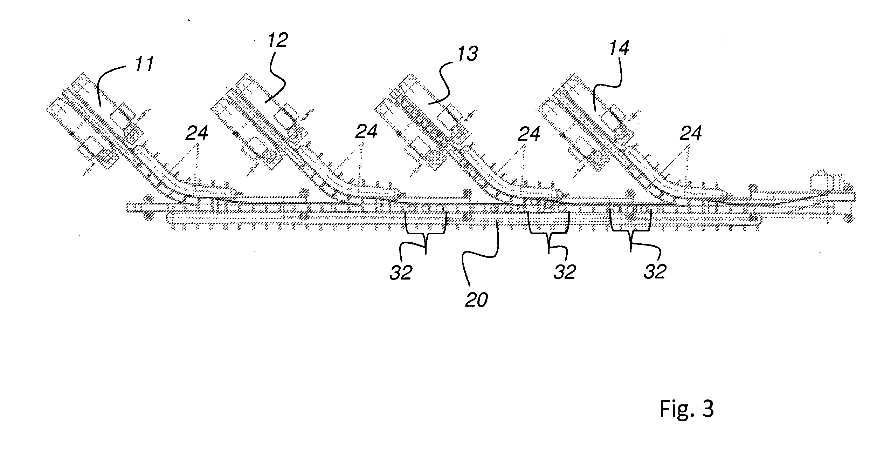

**Figur 3** zeigt eine weitere Ausführungsform der Anordnung der Zuführeinheiten 11, 12, 13 und 14 in Bezug auf das Transportband 20. Bei der hier gezeigten Ausführungsform sind vier Zuführeinheiten 11, 12, 13 und 14 vorgesehen, die über eine Übergabekette 24 an das Transportband 20 angekoppelt sind. Die Übergabekette 24 hat ebenfalls Fächer ausgebildet, in die die zu übergebenden Artikel 4 von der Zuführeinheit 11, 12, 13 und 14 eingebracht werden. Jede der Zuführeinheiten 11, 12, 13 und 14 ist für einen bestimmten Typ eines Artikels bzw. eines Getränkebehälters vorgesehen. Mittels der Zuführeinheiten 11, 12, 13 und 14 können somit entsprechende Takte 32 eines Typs eines Artikels 4 an das Transportband 20 übergeben werden. Nachdem das Transportband 20 die Übergabestellen der Artikel 4 an das Transportband 20 durchlaufen hat, liegt im Transportband 20 eine Reihe von Artikeln 4 vor, deren Takte sich in Bezug auf den Artikeltyp unterscheiden. Die Länge der Takte hängt letztendlich von dem ausgewählten Sortierschema ab. Je nach dem ausgewählten Sortierschema werden die Zuführeinheiten 11, 12, 13 und 14 derart gesteuert, dass letztendlich auf dem Transportband 20 die erforderliche Reihenbildung hergestellt wird um letztendlich auf dem Gruppiertisch 6 die erforderlichen Gassen zu bilden, bevor die Artikel an die Weiterverarbeitungseinheit 2 übergeben werden.

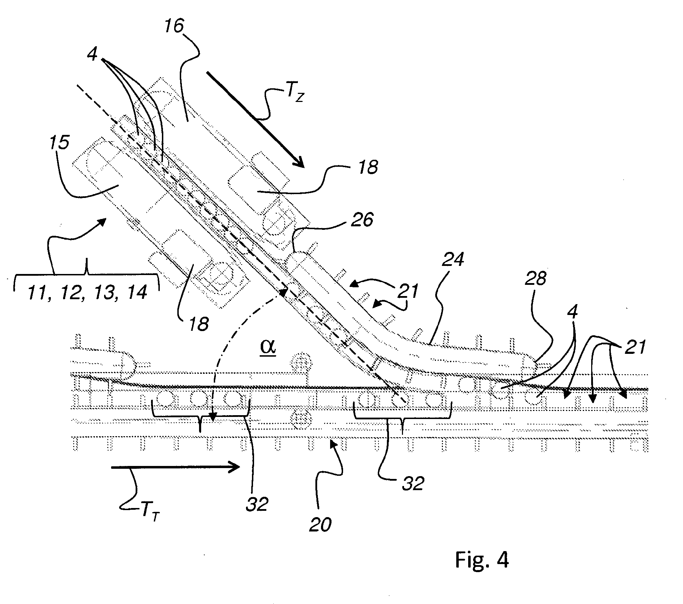

**Figur 4** zeigt eine bevorzugte Ausführungsform, mit der die Artikel 4 von den Zuführeinheiten 11, 12, 13 und 14 an das Transportband 20 übergeben werden. Um eine kontinuierliche und schnelle Übergabe der Artikel 4 von den Zuführeinheiten 11, 12, 13 und 14 an das Transportband 20 zu ermöglichen, empfiehlt es sich zwischen den Zuführeinheiten 11, 12, 13 und 14 und dem Transportband 20 eine Übergabekette 24 vorzusehen. Die Transportrichtung T_{Z} der Zuführeinheiten 11, 12, 13 und 14 ist in Bezug auf die Transportrichtung T_{T} des Transportbandes 20 unter einem Winkel α angeordnet. Wie bereits in der Beschreibung zu Figur 2 erwähnt ist beidseits der zu transportierenden Artikel 4 bei jeder Zuführeinheit 11, 12, 13 und 14 ein erstes Band 15 und ein zweites Band 16 vorgesehen, mittels der die einzelnen Artikel 4 der Übergabekette 24 zugeführt werden. Die Übergabekette 24 ist analog zum Transportband 20 als Fächerkette ausgebildet. Von den Zuführeinheiten 11, 12, 13 und 14 werden die Artikel 4 entsprechend dem gewünschten Sortierschema bzw. entsprechend der Befehle von der Steuereinheit 30 in einzelnen Taschen bzw. Fächern 21 der Übergabekette 24 zugeführt. Bei der in Figur 4 gezeigten Darstellung erhält man mittels der Übergabekette 24 einen gesamten Übergang von der Transportrichtung T_{Z} der Zuführeinheit 11, 12, 13 und 14 und der Transportrichtung T_{T} des Transportbandes 20. Die Übergabekette 24 ist dabei derart angeordnet, dass ein Ende 26 der Übergabekette 24, welches der Zuführeinheit 11, 12, 13 und 14 gegenüberliegt, im Wesentlichen in Richtung der Transportrichtung T_{Z} der Zuführeinheit 11, 12, 13 und 14 ausgerichtet ist. Das andere Ende 28 der Übergabekette 24, welche dem Transportband 20 gegenüberliegt, ist im Wesentlichen entsprechend der Transportrichtung T_{T} des Transportbandes 20 ausgerichtet. Durch diese spezielle Anordnung des Übergabebandes 24 erhält man somit eine störungsfreie Eintaktung der Artikel 4 von den Zuführeinheiten 11, 12, 13 und 14 in das Transportband 20.

Um eine hohe Leistung der Vorrichtung gewährleisten zu können, müssen die Artikel 4 von den Zuführeinheiten 11, 12, 13 und 14 mit einer entsprechenden Geschwindigkeit an das kontinuierlich laufende Transportband 20 übergeben werden. Zur Vermeidung von Beschädigungen der Artikel 4 ist es vorteilhaft, einen allmählichen Übergang von der Transportrichtung T_{Z} der Zuführeinheit 11, 12, 13 und 14 zu der Transportrichtung T_{T} des Transportbandes 20 bereitzustellen. Dies ist vor allem durch die Übergabekette 24, wie in Figur 4 dargestellt, möglich. Durch die Übergabekette 24 wird somit ein sanfter Übergang von den Zuführeinheiten 11, 12, 13 und 14 zu dem Transportband 20 ermöglicht. Je nach Sortierschema werden von den Zuführeinheiten 11, 12, 13 und 14 Artikel 4 eines Typs in Form von Takten 32 an das Transportband 20 übergeben.

Das Sortierschema, anhand dessen die einzelnen Artikeltypen an das Transportband 20 übergeben werden, wird von der Steuereinheit 30 vorgegeben. Entsprechend der Vorgabe werden, wie bereits erwähnt, die Zuführeinheiten 11, 12, 13 und 14 gesteuert. Die Artikel 4 werden von der Zuführeinheit 11, 12, 13 und 14 bzw. mit einer dazwischen geschalteten Übergabekette 24 an die einzelnen Fächer 21 der Transportkette übergeben. Jedes Fach 21 der Transportkette enthält einen Artikel 4. Entsprechend dem vorgegebenen Sortierschema können auch Takte 32 von Artikeln 4 an das Transportband 20 übergeben werden. Das Transportband 20 ist ein lineares Transportband 20, so dass nachdem alle Zuführeinheiten 11, 12, 13 und 14 die Artikel 4 bzw. die Takte 32 von Artikeln 4 an das Transportband 20 übergeben haben, im Transportband 20 eine Reihe von Artikeln 4 vorliegt. Die Reihe aus den Takten 32 bzw. den Artikeln 4 wird einem Gruppiertisch 6 zugeführt. Mit dem Gruppiertisch 6 wird aus den Takten 32 das für die Weiterverarbeitungseinheit erforderliche Sortierschema erzeugt.

Die Erfindung wurde unter Bezugnahme auf bevorzugte Ausführungsformen beschrieben. Es ist für einen Fachmann selbstverständlich, dass Änderungen und Abwandlungen gemacht werden können, ohne dabei den Schutzbereich der nachstehenden Ansprüche zu verlassen.

## Patentansprüche

1. Vorrichtung zum Beschicken einer Weiterverarbeitungseinheit (2) mit Artikeln (4) mindestens zweier unterschiedlicher Artikeltypen mit
• einem Transportband (20), das eine Transportrichtung (T_{T}) definiert,
• mehreren Zuführeinheiten (11, 12, 13, 14), die dem Transportband (20) zur Zuführung von Artikel (4) je eines Artikeltyps zugeordnet sind und die jeweils eine Zuführrichtung (T_{Z}) definieren, wobei die Zuführrichtung (T_{Z}) zur Transportrichtung (T_{T}) unter einem Winkel (α) angeordnet ist;
• einer Weiterverarbeitungseinheit (2), wobei das Transportband (20) der Weiterverarbeitungseinheit (2) zur Zuführung der Artikel (4) unterschiedlicher Artikeltypen nach einem vorbestimmten Schema vorgelagert ist; und
• einer Steuereinheit (30), die die mehreren Zuführeinheiten (11, 12, 13, 14) derart steuert, dass die Artikel (4) unterschiedlicher Artikeltypen gemäß dem vorbestimmten Schema an das Transportband (20) übergebbar sind;
**gekennzeichnet durch**
• jeweils eine Übergabekette (24) für jede der Zuführeinheiten (11, 12, 13, 14), die zur Übergabe von Artikeln (4) zwischen jeder Zuführeinheit (11, 12, 13, 14) und dem Transportband (20) angeordnet ist,
o wobei ein Ende (26) der Übergabekette (24) der jeweiligen Zuführeinheit (11, 12, 13, 14) gegenüberliegt und entsprechend ihrer jeweiligen Zuführrichtung (T_{Z}) ausgerichtet ist, und
o wobei ein anderes Ende (28) der Übergabekette (24) dem Transportband (20) gegenüberliegt und entsprechend ihrer Transportrichtung (T_{T}) ausgerichtet ist.

2. Vorrichtung (1) nach Anspruch 1, wobei jeder der Winkel (α), unter dem die Transportrichtungen (T_{Z}) der Zuführeinheiten (11, 12, 13, 14) zur Transportrichtung (T_{T}) des Transportbandes (20) angeordnet sind, gleich ist.

3. Vorrichtung (1) nach Anspruch 2, wobei der Winkel (α) im Bereich zwischen 45° und 90° liegt.

4. Vorrichtung (1) nach Anspruch 3, wobei der Winkel (α) im Bereich zwischen 50° und 70° liegt.

5. Vorrichtung (1) nach einem der Ansprüche 1 bis 4, wobei das Transportband (20) eine Fächerkette oder Schleppkette ist.

6. Vorrichtung (1) nach einem der Ansprüche 1 bis 5, wobei die mehreren Zuführeinheiten (11, 12, 13, 14) aus einem ersten Band (15) und einem zweiten Band (16) bestehen, die beidseits der zu vereinzelnden Artikel (4) angeordnet sind und wobei das erste Band (15) und das zweite Band (16) jeweils über einem eigenen Motor (18) verfügt.

7. Vorrichtung (1) nach einem der Ansprüche 1 bis 5, wobei die mehreren Zuführeinheiten (11, 12, 13, 14) aus einem ersten Band (15) und einem zweiten Band (16) bestehen, die beidseits der zu vereinzelnden Artikel (4) angeordnet sind und wobei das erste Band (15) und das zweite Band (16) über einem gemeinsamen Motor (18) verfügen.

8. Vorrichtung (1) nach einem der Ansprüche 1 bis 7, wobei die mehreren Zuführeinheiten (11, 12, 13, 14) aus einem ersten Band (15) und einem zweiten Band (16) bestehen, die beidseits der zu vereinzelnden Artikel (4) angeordnet sind und wobei das erste Band (15) und das zweite Band (16) mittels einer Führung weitenverstellbar zur Anpassung an den Durchmesser der Artikel (4) angebracht sind.

9. Vorrichtung nach einem der Ansprüche 1 bis 8, wobei der Weiterverarbeitungseinheit (2) ein Gruppiertisch (6) vorgeordnet ist, mittels dem die unterschiedlichen Artikeltypen der Weiterverarbeitungseinheit (2)nach einem vorbestimmten Schema zuführbar sind.

10. Verfahren zum Beschicken einer Weiterverarbeitungseinheit (2) mit Artikeln (4) mindestens zweier unterschiedlicher Artikeltypen, **gekennzeichnet durch** die folgenden Schritte:
• dass ein Sortier- oder Packschema für die unterschiedlichen Artikeltypen von einer Steuereinheit (30) vorgegeben wird;
• dass in Abhängigkeit von dem Sortier- oder Packschema die Artikel (4) aus mehreren Zuführeinheiten (11, 12, 13, 14), wobei jede der Zuführeinheiten (11, 12, 13, 14) einen Artikel (4) eines anderen Typs enthalten kann, an ein Transportband (20) übergeben werden, wobei die einzelnen Artikel jeweils in ein Fach (21) des Transportbandes (20) übergeben werden; und
• dass auf dem Transportband (20) von den Artikeln (4) unterschiedlicher Artikeltypen gemäß dem Sortier- oder Packschema eine Reihe gebildet wird, die mehrere Takte (32) umfasst, wobei jeder Takt (32) Artikel (4) eines Typs umfasst;
• dass eine Steuereinheit (30) die mehreren Zuführeinheiten (11, 12, 13, 14) derart steuert, dass die Artikel (4) unterschiedlicher Artikeltypen gemäß dem vorbestimmten Schema vermittels jeweils eine Übergabekette (24) für jede der Zuführeinheiten (11, 12, 13, 14), die zwischen jeder Zuführeinheit (11, 12, 13, 14) und dem Transportband (20) angeordnet ist, an das Transportband (20) übergeben werden, wobei ein Ende (26) der Übergabekette (24) der jeweiligen Zuführeinheit (11, 12, 13, 14) gegenüberliegt und entsprechend ihrer jeweiligen Zuführrichtung (T_{Z}) ausgerichtet ist, und wobei ein anderes Ende (28) der Übergabekette (24) dem Transportband (20) gegenüberliegt und entsprechend ihrer Transportrichtung (T_{T}) ausgerichtet ist.

11. Verfahren nach Anspruch 10 wobei die Reihe aus den Takten (32), die sich hinsichtlich des Artikeltyps unterscheiden, einem Gruppiertisch (6) zugeführt werden, mit dem aus den Takten (32) das für die Weiterverarbeitungseinheit (2) erforderliche Sortier- oder Packschema erzeugt wird.

## Claims

1. Apparatus for feeding a further processing unit (2) with articles (4) of at least two different articles types comprising
• a conveyor belt (20), which defines a direction of transport (T_{T}),
• multiple infeed units (11, 12, 13, 14), which are assigned to the conveyor belt (20) for feeding articles (4) of one article type each and which each define one feeding direction (T_{z}), wherein the feeding direction (T_{z}) is arranged at an angle (α) to the direction of transport (T_{T});
• a further processing unit (2), wherein the conveyor belt (20) for the feeding of the articles (4) of different article types is upstream of the further processing unit (2) according to a predetermined pattern; and
• a control unit (30), which controls the multiple infeed units (11, 12, 13, 14) in such a way that the articles (4) of different article types can be delivered to the conveyor belt (20) according to the predetermined pattern;
**characterized by**
• one transfer chain (24) each for each of the infeed units (11, 12, 13, 14), which is arranged between each infeed unit (11, 12, 13, 14) and the conveyor belt (20) for the delivery of articles (4),
○ wherein an end (26) of the transfer chain (24) faces the respective infeed unit (11, 12, 13, 14) and is aligned according to its respective feeding direction (T_{z}), and
○ wherein another end (28) of the transfer chain (24) faces the conveyor belt (20) and is aligned according to its direction of transport (T_{T}).

2. Apparatus (1) according to claim 1, wherein each of the angles (α), at which the directions of transport (T_{z}) of the infeed units (11, 12, 13, 14) are arranged to the direction of transport (T_{T}) of the conveyor belt (20), are equal.

3. Apparatus (1) according to claim 2, wherein the angle (α) is in the range between 45° and 90°.

4. Apparatus (1) according to claim 3, wherein the angle (α) is in the range between 50° and 70°.

5. Apparatus (1) according to one of the claims 1 to 4, wherein the conveyor belt (20) is a pocket-type conveyor or drag chain.

6. Apparatus (1) according to one of the claims 1 to 5, wherein the multiple infeed units (11, 12, 13, 14) consist of a first belt (15) and a second belt (16), which are arranged on each side of the articles (4) to be separated and wherein the first belt (15) and the second belt (16) each have their own motor (18).

7. Apparatus (1) according to one of the claims 1 to 5, wherein the multiple infeed units (11, 12, 13, 14) consist of a first belt (15) and a second belt (16), which are arranged on each side of the articles (4) to be separated and wherein the first belt (15) and the second belt (16) have a common motor (18).

8. Apparatus (1) according to one of the claims 1 to 7, wherein the multiple infeed units (11, 12, 13, 14) consist of a first belt (15) and a second belt (16), which are arranged on each side of the articles (4) to be separated and wherein the first belt (15) and the second belt (16) are mounted to be width-adjustable by means of a guide for adjusting to the diameter of the articles (4).

9. Apparatus (1) according to one of the claims 1 to 8, wherein a grouping table (6) is arranged upstream of the further processing unit (2), by means of which the different article types can be fed to the further processing unit (2) according to a predetermined pattern.

10. Process for feeding a further processing unit (2) with articles (4) of at least two different article types, **characterized by** the following steps:
• that a sorting or packing pattern for the different article types is predefined by a control unit (30);
• that, depending on the sorting or packing pattern, the articles (4) from the multiple infeed units (11, 12, 13, 14), wherein each of the infeed units (11, 12, 13, 14) can contain an article (4) of a different article type, are delivered to a conveyor belt (20), wherein the individual articles are each delivered into a compartment (21) of the conveyor belt (20); and
• that on the conveyor belt (20) a row is formed by the articles (4) of different article types according to the sorting or packing pattern, which row comprises of multiple cycles (32), wherein each cycle (32) comprises articles (4) of one type;
• that a control unit (30) controls the multiple infeed units (11, 12, 13, 14) in such a way that the articles (4) of different article types are delivered to the conveyor belt (20) according to the predetermined pattern by means of a transfer chain (24) each for each of the infeed units (11, 12, 13, 14), which is arranged between each infeed unit (11, 12, 13, 14) and the conveyor belt (20), wherein an end (26) of the transfer chain (24) faces the respective infeed unit (11, 12, 13, 14) and is aligned according to its respective feeding direction (T_{z}), and wherein another end (28) of the transfer chain (24) faces the conveyor belt (20) and is aligned according to its direction of transport (T_{T}).

11. Process according to claim 10, wherein the row of the cycles (32), which differ in regards to the article types, is fed to a grouping table (6), with which the sorting or packing pattern required for the further processing unit (2) is created from the cycles (32).

## Revendications

1. Dispositif d'alimentation d'une unité de traitement (2) avec des articles (4) d'au moins deux types différents avec
• une bande transporteuse (20) qui définit une direction de transport (T_{T}),
• plusieurs unités d'amenée (11, 12, 13, 14) qui sont attribuées à la bande transporteuse (20) pour amener les articles (4) de chaque type et qui définissent respectivement une direction d'amenée (T_{z}), la direction d'amenée (T_{z}) étant disposée par rapport à la direction de transport (T_{T}) selon un angle (α) ;
• une unité de traitement (2), la bande transporteuse (20) étant disposée en amont de l'unité de traitement (2) selon un schéma prédéfini pour l'amenée des articles (4) de différents types ; et
• une unité de commande (30) qui commande les différentes unités d'amenée (11, 12, 13, 14) de telle sorte que les articles (4) de différents types peuvent être transferés selon le schéma prédéfini à la bande transporteuse (20)
**caractérisé par**
• respectivement une chaîne de transfert (24) pour chacune des unités d'amenée (11, 12, 13, 14) qui est située pour la transfert des articles (4) entre chacune des unités d'amenée (11, 12, 13, 14) et la bande transporteuse (20),
○ une extrémité (26) de la chaîne de transfert (24) se trouvant en face de l'unité d'amenée respective (11, 12, 13, 14) et étant orientée en fonction de sa direction d'amenée (T_{Z}) correspondante, et
○ une autre extrémité (28) de la chaîne de transfert (24) se trouvant en face de la bande transporteuse (20) et étant orientée en fonction de sa direction de transport (T_{T}).

2. Dispositif (1) selon la revendication 1, chacun des angles (α) selon lequel les directions de transport (T_{Z}) des unités d'amenée (11,12, 13, 14) sont situées par rapport à la direction de transport (T_{T}) de la bande transporteuse (20) étant égal.

3. Dispositif (1) selon la revendication 2, l'angle (α) se trouvant dans une plage située entre 45° et 90°.

4. Dispositif (1) selon la revendication 3, l'angle (α) se trouvant dans une plage située entre 50° et 70°.

5. Dispositif (1) selon l'une des revendications 1 à 4, la bande transporteuse (20) étant une chaîne à compartiments ou une chaîne de traction.

6. Dispositif (1) selon l'une des revendications 1 à 5, les différentes unités d'amenée (11, 12, 13, 14) étant composée d'une première bande (15) et d'une seconde bande (16) qui sont situées des deux côtés des articles (4) à désassortir et la première bande (15) et la seconde bande (16) disposant respectivement de leur propre moteur (18).

7. Dispositif (1) selon l'une des revendications 1 à 5, les différentes unités d'amenée (11, 12, 13, 14) étant composée d'une première bande (15) et d'une seconde bande (16) qui sont situées des deux côtés des articles (4) à désassortir et la première bande (15) et la seconde bande (16) disposant d'un moteur commun (18).

8. Dispositif (1) selon l'une des revendications 1 à 7, les différentes unités d'amenée (11, 12, 13, 14) étant composée d'une première bande (15) et d'une seconde bande (16) qui sont situées des deux côtés des articles (4) à désassortir et la première bande (15) et la seconde bande (16) étant placées de sorte à pouvoir être réglées en largeur à l'aide d'un guidage pour s'adapter au diamètre des articles (4).

9. Dispositif selon l'une des revendications 1 à 8, l'unité de traitement (2) étant arrangée en amont une table de groupement (6) à l'aide de laquelle les différents types d'articles peuvent être livrés à l'unité de traitement (2) selon un schéma prédéfini.

10. Procédé d'alimentation d'une unité de traitement (2) avec des articles (4) d'au moins deux types différents **caractérisé par** les étapes suivantes :
• un schéma de tri ou d'emballage est prédéfini pour les différents types d'articles au moyen d'une unité de commande (30) ;
• en fonction du schéma de tri ou d'emballage, les articles (4) de plusieurs unités d'amenée (11, 12, 13, 14), chacune des unités d'amenée (11, 12, 13, 14) pouvant contenir un article (4) d'un autre type, sont remis à une bande transporteuse (20), les différents articles étant transferrés dans un compartiment (21) de la bande transporteuse (20) ; et
• sur la bande transporteuse (20), les articles (4) de différents types forment selon le schéma de tri ou d'emballage une série qui comprend plusieurs cadences (32), chaque cadence (32) comprenant des articles (4) d'un type ;
• une unité de commande (30) qui commande plusieurs unités d'amenée (11, 12, 13, 14) de telle sorte que les articles (4) de différents types sont transferrés à la bande transporteuse (20) selon la schéma prédéfini à l'aide respectivement d'une chaîne de transfert (24) pour chacune des unités d'amenée (11, 12, 13, 14) qui est située entre chaque unité d'amenée (11, 12, 13, 14) et la bande transporteuse (20), une extrémité (26) de la chaîne de transfert (24) se trouvant en face de l'unité d'amenée correspondante (11, 12, 13, 14) et étant orientée selon sa direction d'amenée correspondante (T_{Z}), et une autre extrémité (28) de la chaîne de transfert (24) se trouvant en face de la bande transporteuse (20) et étant orientée selon sa direction de transport (T_{T}).

11. Procédé selon la revendication 10, la série de cadences (32) différenciées du point de vue du type d'article étant amenée à une table de groupement (6) qui génère à partir des cadences (32) le schéma de tri ou d'emballage nécessaire pour l'unité de traitement (2).
